# EUROPEAN PATENT SPECIFICATION

(11) **EP 1 240 647 B1**
(45) Date of publication and mention of the grant of the patent: **19.04.2006**
(21) Application number: 00985455.5
(22) Date of filing: 04.12.2000
(51) Int. Cl.: G21C 19/42

(54) **ACTINIDE PRODUCTION**
HERSTELLUNG VON AKTINIDEN
PRODUCTION D'ACTINIDES

(30) Priority: 03.12.1999 GB 9928655
(43) Date of publication of application: 18.09.2002
(73) Proprietor: British Nuclear Fuels PLC, Warrington, Cheshire WA3 6AS (GB)
(72) Inventor: Hatter, Justine Elizabeth, Warrington, Cheshire WA3 6AS (GB); Thied, Robert Charles, Seascale, Cumbria CA20 1PG (GB)
(74) Representative: Chalk, Anthony John
(86) International application number: PCT/GB2000/004604
(87) International publication number: WO 2001/041152

(56) References cited:
- US-A- 4 880 506
- US-A- 5 650 053
- US-H- H 857

## Description

### Field of the Invention

This invention relates to methods for the production of metals from oxides present in spent nuclear fuels and is particularly applicable to the production of actinides, for instance uranium, from actinide oxides which are present in irradiated nuclear fuels. Methods of the present invention can be used in the treatment of irradiated fuels for producing actinides in metallic form suitable for use as feeds in subsequent electrorefining processes.

### Background to the Invention

Two processes have been developed for the treatment of irradiated nuclear fuel making use of molten salts. As used herein, the term "molten salts" is intended to cover salts such as lithium chloride which melts at an elevated temperature and also ionic liquids which typically are liquid at room temperature or which melt at a temperature up to about 100°C.

The Dimitrovgrad SSC-RIAR process makes use of chemical oxidants (chlorine and oxygen gases) to react with powdered uranium dioxide fuel to form higher oxidation state compounds such as UO₂Cl₂ which are soluble in the molten salt. In an electrochemical cell the uranium compounds are reduced to UO₂ at the cathode, forming a dendritic deposit. This process has both technical and environmental limitations.

The second process, developed by the Argonne National Laboratory (ANL) is fundamentally an electrorefining technology which uses current flow to oxidise anodic uranium to form uranium ions in the molten salt electrolyte. At the cathode the uranium is reduced and electrodeposited as uranium metal.

The ANL process requires a metal feed. If oxide fuels are to be treated, it is necessary to reduce the uranium oxide (usually UO₂ pellets) to the metal. This reduction process is carried out chemically, using lithium metal in a LiCl or LiCl/KCl molten salt at 500 to 600°C. Alternatively, a salt transport process can be used involving a Cu-Mg-Ca alloy and molten CaCl₂ salt. However, in both reduction methods the by-products, Li₂O and CaO respectively, need to be recovered from the molten salt phase by an electrolysis step. Effectively this means a two stage process.

A disadvantage of the lithium reduction process for producing a metallic feed from an oxide is the production of Li₂O by-product. This requires recycle to make the process economic, and this is done by an electrolytic recovery of lithium metal. Hence you have a two stage process, a reduction step, followed by a lithium recovery.

### Statements of Invention

According to the present invention there is provided a process for reducing to metallic form a metal oxide present in spent nuclear fuel, the process comprising cathodically electrolysing the oxide in the presence of a molten salt electrolyte, the potential of the cathode being controlled so as to favour oxygen ionisation over deposition of the metal from the cations present in the molten salt.

Accordingly, the present invention involves the use of a single electrochemical process to reduce the metal oxide fuel to a metallic form, with oxygen produced as the only by-product. It is important that the potential of the cathode is maintained and controlled so that only oxygen ionisation occurs and not the deposition of the cations (eg Ca ions) in the fused salt.

Typically the oxide comprises an actinide oxide, such as uranium oxide, irradiated uranium oxide or mixed uranium/plutonium oxides.

The oxide may be in any physical form, and this is generally dependent on the particular chemical nature of the spent nuclear fuel and the processing to which the material has previously been subjected. For example, the fuel may comprise a powder, an amorphous mass, or a dense solid agglomerate. In any event, the material may be treated according to the method of the present invention by connection to an electrical circuit such that it serves as the cathode during electrolysis. Connection to the circuit may be effected by any of the standard means well known to those skilled in the art.

Preferably the oxide fuel is in contact with the cathode of an electrochemical cell. The cathode could be in the form of a mesh basket. The molten salt electrolyte may be any suitable molten salt, for instance, CaCl₂ and BaCl₂.

The anode may be any suitable inert anode, such as carbon. In a process of the present invention the oxide fuel may be first treated mechanically to remove its zircaloy cladding before it is added to the electrolytic cell. Alternatively, the zircaloy cladding is first chopped into segments, and these segments are treated by the process of the invention.

### Detailed description of the Invention

In order to carry out an embodiment of the present invention, an electrolytic cell is assembled which has a carbon anode and a mesh basket cathode. Irradiated oxide fuel is placed in the mesh basket. The electrolyte consists of a molten salt such as CaCl₂ or BaCl₂. A voltage is applied between the cathode and the anode. At the cathode the reaction involves the diffusion of oxygen atoms to the surface of the molten salt, followed by ionisation according to the reaction:

O + 2e⁻ → O²⁻.

The oxide ions which are produced dissolve in the electrolyte and are transferred to the anode where they are re-oxidised to produce oxygen gas. The potential at the cathode is controlled, via a third reference electrode, to ensure that the reaction occurring at the cathode is oxygen ionisation and not deposition of the cations in the fused salt. Electrolysis at elevated temperatures results in an increased rate of oxygen diffusion, thereby also encouraging ionisation rather than metal deposition.

After electrolysis the irradiated fuel is left in the form of a metallic solid at the cathode. This metallic solid, which contains fission products, can be removed and used directly as the feed for an electrorefining process. The remaining components of the cell may be re-used immediately without the need for any cleaning.

In an alternative embodiment in accordance with the present invention the electrolytic ionisation of oxygen and the electrorefining processes are carried out in the same cell.

It is to be emphasised that the advantage of process of the present invention is that it is effectively a single stage process. It may be used for the treatment of irradiated oxide nuclear fuel, possibly in the form of pellets, and will be applied to fuels such as uranium oxide, and mixed uranium and plutonium fuels known as MOX fuels.

Changes in the morphology of spent fuel material comprising uranium oxide have been observed following electrolysis, and these changes are indicative of the electrochemical reduction of the oxide to the metal during the course of the process. Thus, the porous structure associated with the oxide is seen to become much less porous as the metal is formed; this is consistent with the greater mobility of uranium metal, as compared with its oxide.

Detailed examination of the products obtained from the reduction of zirconium dioxide has been carried out by means of energy dispersive X-ray analysis (edax) and has allowed for the identification of a metallic solid containing 0.3 wt% oxygen, thereby confirming the success of the process. Similar studies have also been carried out with cerium dioxide, yielding metallic cerium containing 4 wt% oxygen.

## Claims

1. A process for reducing to metallic form a metal oxide present in spent nuclear fuel, the process comprising cathodically electrolysing the oxide in the presence of a molten salt electrolyte, the potential of the cathode being controlled so as to favour oxygen ionisation over deposition of the metal from the cations present in the molten salt.

2. A process according to claim 1 wherein the oxide comprises an actinide oxide.

3. A process according to Claim 2 wherein the actinide oxide comprises uranium oxide, irradiated uranium oxide or mixed uranium/plutonium oxide fuel pellets.

4. A process according to Claim 3 wherein the uranium oxide comprises uranium dioxide.

5. A process according to any of the preceding claims wherein the oxide is located in a mesh basket which forms the cathode.

6. A process according to any of the preceding claims wherein the molten salt is CaCl₂ or BaCl₂.

7. A process according to any of the preceding claims wherein the anode is a carbon anode.

8. A process according to any of the preceding claims wherein the fuel is treated together with its cladding.

9. A process according to Claim 8 wherein the cladding is removed from the fuel prior to electrolytic treatment.

10. A process according to any of the preceding claims wherein the metal resulting from the process is used as the feed for an electrorefining process.

11. A process according to Claim 10 wherein the electrorefining process is carried out in the same electrolytic cell as the electrolytic reduction process.

## Revendications

1. Procédé de réduction sous forme métallique d'un oxyde de métal présent dans un combustible nucléaire usé, ledit procédé comprenant l'électrolyse de l'oxyde à la cathode en présence d'un électrolyte à base de sel fondu, le potentiel de la cathode étant maîtrisé de façon à favoriser l'ionisation d'oxygène par rapport au dépôt du métal à partir des cations présents dans le sel fondu.

2. Procédé selon la revendication 1, dans lequel l'oxyde comprend un oxyde d'actinide.

3. Procédé selon la revendication 2, dans lequel l'oxyde d'actinide comprend des granules de combustible contenant de l'oxyde d'uranium, de l'oxyde d'uranium irradié ou un oxyde mixte d'uranium/plutonium.

4. Procédé selon la revendication 3, dans lequel l'oxyde d'uranium comprend du dioxyde d'uranium.

5. Procédé selon l'une quelconque des revendications précédentes, dans lequel l'oxyde est situé dans un panier à mailles qui forme la cathode.

6. Procédé selon l'une quelconque des revendications précédentes, dans lequel le sel fondu est CaCl₂ ou BaCl₂.

7. Procédé selon l'une quelconque des revendications précédentes, dans lequel l'anode est une anode à base de carbone.

8. Procédé selon l'une quelconque des revendications précédentes, dans lequel le combustible est traité conjointement avec sa gaine.

9. Procédé selon la revendication 8, dans lequel la gaine est enlevée du combustible avant le traitement électrolytique.

10. Procédé selon l'une quelconque des revendications précédentes, dans lequel le métal résultant du procédé est utilisé en tant que matière de départ pour un procédé d'électroraffinage.

11. Procédé selon la revendication 10, dans lequel le procédé d'électroraffinage est mis en oeuvre dans la même pile électrolytique que le procédé de réduction électrolytique.

## Patentansprüche

1. Verfahren zur Reduktion zu einer metallischen Form eines in abgebrannten Kernbrennstoffen enthaltenen Metalloxids, wobei das Verfahren eine katodische Elektrolyse des Oxids in Gegenwart eines Salzschmelzenelektrolyts aufweist, und das Potential der Katode so gesteuert wird, dass eine Sauerstoffionisierung bevorzugt vor einer Abscheidung des Metalls von den in der Salzschmelze vorhandenen Kationen stattfindet.

2. Verfahren gemäß Anspruch 1, wobei das Oxid ein Aktinidoxid enthält.

3. Verfahren gemäß Anspruch 2, wobei das Aktinidoxid Uranoxid-, bestrahlte Uranoxid- oder eine Mischung aus Uran/Plutoniumoxid-Brennstoffpellets enthält.

4. Verfahren gemäß Anspruch 3, wobei das Uranoxid Urandioxid enthält.

5. Verfahren gemäß einem der vorigen Ansprüche, wobei sich das Oxid in einem Maschenkorb befindet, der die Katode bildet.

6. Verfahren gemäß einem der vorigen Ansprüche, wobei es sich bei der Salzschmelze um CaCl₂ oder BaCl₂ handelt.

7. Verfahren gemäß einem der vorigen Ansprüche, wobei es sich bei der Anode um eine Kohlenstoffanode handelt.

8. Verfahren gemäß einem der vorigen Ansprüche, wobei der Brennstoff zusammen mit der Hülle behandelt wird.

9. Verfahren gemäß Anspruch 8, wobei die Hülle vor der elektrolytischen Behandlung vom Brennstoff entfernt wird.

10. Verfahren gemäß einem der vorigen Ansprüche, wobei das aus dem Verfahren resultierende Metall als Zufuhrmaterial für ein elektrolytisches Raffinationsverfahren verwendet wird.

11. Verfahren gemäß Anspruch 10, wobei das elektrolytische Raffinationsverfahren in der Elektrolysezelle stattfindet, die auch für das elektrolytische Reduktionsverfahren verwendet wird.
